# EUROPÄISCHE PATENTSCHRIFT

(11) **EP 2 313 445 B1**
(45) Veröffentlichungstag und Bekanntmachung des Hinweises auf die Patenterteilung: **02.11.2011**
(21) Anmeldenummer: 09779791.4
(22) Anmeldetag: 16.06.2009
(51) Int. Cl.: C08G 18/08, C08G 18/48, C08G 18/75, C08G 18/12, C09J 175/08, B01J 19/18

(54) **HERSTELLUNG VON SILYLIERTEN POLYURETHANEN UND/ODER POLYHARNSTOFFEN**
PRODUCTION OF SILYLATED POLYURETHANE AND/OR POLYUREA
PRODUCTION DE POLYURÉES ET/OU DE POLYURÉTHANES SILYLÉS

(30) Priorität: 08.08.2008 EP 08162049
(43) Veröffentlichungstag der Anmeldung: 27.04.2011
(73) Patentinhaber: Construction Research & Technology GmbH, 83308 Trostberg (DE)
(72) Erfinder: KLAPDOHR, Simone, 83022 Rosenheim (DE); WALTHER, Burkhard, 84518 Garching (DE); MACK, Helmut, 83278 Traunstein (DE); CAI, Zhizhong, 83308 Trostberg (DE); MARC, Laurent, F-77850 Hericy (FR); MEZGER, Jochen, 84518 Garching an der Alz (DE); AUSTERMANN, Tobias, 48153 Münster (DE); FLAKUS, Silke, 85560 Ebersberg (DE)
(74) Vertreter: Arlt, Klaus
(86) Internationale Anmeldenummer: PCT/EP2009/057448
(87) Internationale Veröffentlichungsnummer: WO 2010/015452

(56) Entgegenhaltungen:
- WO-A-00/48732
- WO-A-2007/037824
- US-A1- 2004 204 539
- US-A1- 2008 057 316

## Beschreibung

Die vorliegende Erfindung betrifft ein Verfahren zur Herstellung von silylierten Polyurethanen und/oder Polyharnstoffen sowie silylierte Polyurethane und/oder Polyharnstoffe, welche gemäß diesem Verfahren herstellbar sind.

Silylierte Polyurethane werden bis heute im industriellen Maßstab üblicherweise in diskontinuierlichen Verfahren hergestellt, bei denen die allgemein bekannten Nachteile der diskontinuierlichen Fahrweise, wie lange Be- und Entladungszeiten, schlechte Wärme- und Masseübertragung, schwankende Qualität der Produkte usw., zum Tragen kommen. Bei der im Rahmen der Prozessintensivierung angestrebten kontinuierlichen Herstellungsweise von silylierten Polyurethanen sollten diese Nachteile zumindest in einer geringeren Ausprägung vorliegen. Allerdings scheint bis heute für die großtechnische Herstellung von silylierten Polyurethanen noch kein entsprechendes zufriedenstellendes Konzept der Prozessintensivierung vorzuliegen.

Als kontinuierliches Verfahren zur Herstellung von silylierten Polyurethanen schlägt die WO 2007/037824 A2 einen Prozess vor, in welchem ein kontinuierlicher Strom von Polyol und Isocyanat in einer ersten Reaktionszone eines Reaktors zu Polyurethan umgesetzt wird. In einer zweiten Reaktionszone wird ein Silylierungsmittel kontinuierlich zugeführt und kontinuierlich mit dem Polyurethan so umgesetzt, dass Temperatur und Reaktionszeit ausreichen, um ein silyliertes Polyurethan zu bilden, wobei die Reaktanden linear durch die Reaktionszonen geführt werden. Das Produkt wird anschließend kontinuierlich aus dem Reaktor abgezogen. Als Reaktoren werden insbesondere Rohrreaktoren mit statischen Mischern vorgeschlagen.

Wesentlicher Nachteil des Verfahrens ist die fehlende Selbstreinigung der vorgeschlagenen Reaktoren. So entstehen im Prozess in Totraumzonen Produktablagerungen, die zur Verengung und schließlich zum Verschließen des freien Strömungsquerschnittes des Rohrreaktors führen und die Stabilität sowie die Kontinuität des Herstellungsprozesses begrenzen.

Aufgabe der vorliegenden Erfindung ist es, ein prozessual flexibles und wirtschaftliches Verfahren zur Herstellung von silylierten Polyurethanen bereit zu stellen, welches eine kontinuierlich gute Produktqualität gewährleistet.

Die Lösung dieser Aufgabe ist ein Verfahren zur bevorzugt kontinuierlichen Herstellung von silylierten Polyurethanen und/oder Polyharnstoffen, umfassend die Schritte:
a) Auftragung einer Komponente β) enthaltend Isocyanat sowie einer Komponente α) enthaltend Polyol und/oder Polyamin auf mindestens eine um eine Rotationsachse rotierende Oberfläche eines Körpers A, welche eine Temperatur zwischen 60 und 400°C aufweist,
b) Umsetzung des Reaktionsproduktes von β) Isocyanat sowie α) Polyol und/oder Polyamin mit einem Silylierungsmittel.

Der um eine Rotationsachse rotierende Körper A ermöglicht eine Prozessführung, in der die Kombination von besonders kurzen Verweilzeiten und hohen Reaktionstemperaturen verwirklicht wird. Somit gewährleistet das erfindungsgemäße Verfahren, dass die Komponenten β) und α) sprunghaft stark erwärmt und entsprechend schnell umgesetzt werden können.

Die bevorzugt kontinuierliche Auftragung von β) Isocyanat sowie α) Polyol und/oder Polyamin auf mindestens eine um eine Rotationsachse rotierende Oberfläche eines Körpers A bietet die Möglichkeit einer flexiblen und einfachen Prozessoptimierung. Der in der Verfahrenstechnik oft problematische "Scaleup" ist aufgrund der Einfachheit und der normalerweise relativ geringen Größe des den Körper A umfassenden Reaktors besonders einfach. Weiterhin sollte erwähnt sein, dass sowohl die Investitionskosten als auch die Unterhaltskosten (Reinigung etc.) des besagten Reaktors recht niedrig sind. Außerdem kann die Qualität des erhaltenen Produkts leicht durch Veränderung der Prozessparameter (Verweilzeit, Temperatur, Dosierung der Komponenten β), α) und ggf. des Silylierungsmittels) gezielt variiert werden.

In einer bevorzugten Ausführungsform der Erfindung wird das Silylierungsmittel bevorzugt kontinuierlich auf eine rotierende Oberfläche des Körpers A aufgetragen, wobei die Auftragung in einem Bereich der Oberfläche durchgeführt wird, an dem der Umsetzungsgrad von β) Isocyanat mit α) Polyol und/oder Polyamin mindestens 75 mol% beträgt, ggf. bezüglich der im Unterschuss eingesetzten Komponente.

In einer weiteren bevorzugten Ausführungsform der Erfindung wird das Reaktionsprodukt von β) Isocyanat sowie α) Polyol und/oder Polyamin nach dem Verlassen des Körpers A mit einem Silylierungsmittel in einer bevorzugt kontinuierlichen Mischvorrichtung umgesetzt. Hierbei kommen die dem Fachmann bekannten Vorrichtungen in Frage. Insbesondere ist vorgesehen, dass es sich um einen statischen Mischer, einen Extruder, eine Kaskade von kontinuierlichen Rührkesseln, einen Spinning-Disk-Reaktor und einen T-Mischer handelt. Bei der Verwendung der Mischvorrichtung ist es bevorzugt, dass die Temperatur der Polyurethane und Silylierungsmittel enthaltenden Reaktionsmischung zwischen 5 und 120 °C, insbesondere bevorzugt zwischen 20 und 80 °C eingestellt wird.

Die Reaktionsmischung wird bevorzugt nach dem Verlassen der Oberfläche des Körpers A abgekühlt. Zur Abkühlung des Produktes kann eine Quenscheinrichtung verwendet werden. Diese liegt bevorzugt in Form einer oder mehrerer Kühlwände vor, welche die schnelle Abkühlung des Reaktionsgemischs ermöglichen. Die Abkühlung erfolgt bevorzugt innerhalb von maximal fünf Sekunden, besonders bevorzugt innerhalb von nur einer Sekunde. Die Kühlwände, welche häufig zylinder- oder kegelförmig sind, weisen entweder eine glatte oder eine raue Oberfläche auf, deren Temperatur typischerweise zwischen -50 °C und 80 °C liegt. Die mittels der Quenscheinrichtung erfolgte schnelle Abkühlung der Reaktionskomposition beträgt bevorzugt mindestens 50 °C, besonders bevorzugt mindestens 100 °C.

Der rotierende Köper A kann scheiben-, vasen-, ring- oder kegelförmig ausgeführt werden, wobei eine waagrechte oder eine von der Waagrechten um bis zu 45°C abweichende Drehscheibe als bevorzugt anzusehen ist. Normalerweise weist der Körper A einen Durchmesser von 0,10 m bis 3,0 m, bevorzugt 0,20 m bis 2,0 m und besonders bevorzugt von 0,20 m bis 1,0 m auf. Die Oberfläche kann glatt, gewellt und/oder konkav oder konvex sein oder beispielsweise riffeloder spiralförmige Einformungen aufweisen, welche Einfluss auf die Durchmischung und die Verweilzeit des Reaktionsgemischs ausüben. Der Körper A kann bevorzugt aus Metall, Glas, Kunststoff oder einer Keramik gefertigt sein. Zweckmäßigerweise ist der Körper A in einem bezüglich den Bedingungen des erfindungsgemäßen Verfahrens beständigen Container eingebaut.

Die Drehgeschwindigkeit des Körpers A sowie die Dosierungsrate der Komponenten sind variabel. Üblicherweise beträgt die Umdrehungsgeschwindigkeit in Umdrehungen pro Minute 1 bis 20000, bevorzugt 100 bis 5000 und besonders bevorzugt 200 bis 2000. Das Volumen des Reaktionsgemischs, welches sich pro Flächeneinheit der Oberfläche auf dem rotierenden Körper A befindet, beträgt typischerweise 0,03 bis 40 mL/dm², bevorzugt 0,1 bis 10 mL/dm², besonders bevorzugt 1,0 bis 5,0 mL/dm². Es ist als bevorzugt anzusehen, dass die Komponenten β), α) und ggf. das Silylierungsmittels auf der Oberfläche des rotierenden Körpers A in Form eines Films vorliegen, der eine durchschnittliche Dicke zwischen 0,1 µm und 6,0 mm, bevorzugt zwischen 60 und 1000 µm, besonders bevorzugt zwischen 100 und 500 µm aufweist.

Die mittlere Verweilzeit (Häufigkeitsmittel des Verweilzeitspektrums) der Komponenten ist u.a. von der Größe der Oberfläche, von der Art der Verbindungen, von der Temperatur der Oberfläche sowie von der Umdrehungsgeschwindigkeit des rotierenden Körpers A abhängig und beträgt normalerweise zwischen 0,01 und 60 Sekunden, besonders bevorzugt zwischen 0,1 und 10 Sekunden, insbesondere 1 bis 7 Sekunden und ist somit als ausgesprochen kurz anzusehen. Dies gewährleistet, dass das Ausmaß von möglichen Zersetzungsreaktionen und die Bildung unerwünschter Produkte stark reduziert wird und somit die Qualität der Substrate erhalten bleibt.

Die Temperatur des rotierenden Körpers A, insbesondere der der aufgetragenen Komponenten zugewandten Oberfläche, kann in weiten Bereichen variiert werden und hängt sowohl von den eingesetzten Substraten, als auch von der Verweilzeit auf dem Körper A ab. Die Temperatur der temperierten Oberfläche beträgt bevorzugt zwischen 70 und 240 °C, insbesondere zwischen 150 und 230 °C. Die auf den Körper A aufgebrachten Komponenten und/oder der rotierende Körper A können beispielsweise elektrisch, mit einer Wärmeträgerflüssigkeit, mit Dampf, mit einem Laser, mit Mikrowellenstrahlung, Ultraschall oder mittels Infrarotstrahlung beheizt werden.

In einer weiteren Ausführungsform der Erfindung ist vorgesehen, dass die Oberfläche des Körpers A sich auf weitere rotierende Körper erstreckt, so dass die Reaktionsmischung vor dem Abkühlen von der heißen Oberfläche des rotierenden Körpers A auf die heiße Oberfläche mindestens eines weiteren rotierenden, eine heiße Oberfläche aufweisenden Körpers gelangt. Die weiteren rotierenden Körper sind zweckmäßigerweise entsprechend dem Körper A beschaffen. Typischerweise "füttert" dann Körper A die weiteren Körper mit dem Reaktionsgemisch. Das Reaktionsgemisch verlässt diesen mindestens einen weiteren Körper, und wird dann abgekühlt.

Eine bevorzugte Ausführungsform der Erfindung sieht vor, dass der rotierende Körper A als eine Drehscheibe vorliegt, bei der die Ausgangskomponenten α) und β) einzeln und/oder als Mischung bevorzugt kontinuierlich mit Hilfe eines Dosierungssystems im flächenmittleren Bereich aufgetragen werden. Zum Abkühlen der Reaktionsmischung ist eine Quenscheinrichtung als eine die Drehscheibe umgebende Kühlwand vorhanden, auf die die Reaktionskomposition nach Verlassen der heißen Oberfläche auftrifft, wobei ggf. vorher noch das Silylierungsmittel auf die Drehscheibe aufgetragen wird. Unter flächenmittleren Bereich der Drehscheibe ist insbesondere ein Abstand von 35% des Radius ausgehend von der zentrierten Rotationsachse zu verstehen. Als insbesondere bevorzugt ist es anzusehen, dass es sich bei der Drehscheibe um einen Spinning-Disk-Reaktor handelt, wobei derartige Reaktoren beispielsweise in den Dokumenten WO00/48728, WO00/48729, WO00/48730, WO00/48731 und WO00/48732 näher beschrieben werden.

Die Durchsatzregelung des bevorzugt kontinuierlichen Prozesses kann über die Regelung der Dosierung der Komponenten β), α) und des Silylierungsmittels gesteuert werden. Die Durchsatzregelung kann mittels elektronisch ansteuerbarer oder manuell bedienbarer Auslassventile oder Regelventile durchgeführt werden. Hierbei müssen dann die Pumpen, Druckleitungen oder Saugleitungen nicht nur gegen die Viskosität der Edukte, sondern auch gegen einen bestimmten konstanten, frei einstellbaren Druck des eingebauten Regelventils fördern. Diese Art der Durchflussregulierung ist besonders bevorzugt.

Das beschriebene Dosierungssystem ermöglicht es, dass die Komponenten β), α) und ggf. das Silylierungsmittel sehr variabel an verschiedenen Positionen des rotierenden Körpers A zugegeben werden können. Eine Teilmenge oder die gesamten Komponenten β) und α) können aber auch vorgemischt werden und erst anschließend mittels des Dosierungssystems auf die Oberfläche des rotierenden Körpers A aufgetragen werden.

Normalerweise werden die Verfahrensparameter so eingestellt, dass der Umsetzungsgrad von β) Isocyanat mit α) Polyol und/oder Polyamin bevorzugt mindestens 95 mol%, besonders bevorzugt mindestens 98 mol% beträgt, ggf. bezüglich der im Unterschuss eingesetzten Komponente. In diesem Zusammenhang wären als Verfahrensparameter insbesondere die Temperatur, die Verweilzeit, die Schichtdicke des aufgetragenen Films, die Dosierung, sowie Art und Konzentration der eingesetzten Komponenten β) und α) zu nennen. Das Umsetzungsprodukt wird dann je nach Verfahrensvariante direkt auf dem rotierenden Körper A mit dem Silylierungsmittel in Kontakt gebracht oder zunächst abgekühlt und anschließend mit dem Silylierungsmittel in eine bevorzugt kontinuierliche Mischvorrichtung eingebracht. Das Silylierungsmittel kann in beiden Varianten bevorzugt kontinuierlich mittels eines Dosiersystems eingebracht werden.

Die Umsetzung und damit auch die Produktqualität können optional durch eine "on-line"-Messung gesteuert werden. Hierbei hat es sich als zweckmäßig erwiesen, dass die Menge an Silylierungsmittel, welche bevorzugt kontinuierlich eingebracht wird, über eine bevorzugt kontinuierliche Messung gesteuert wird, mit welcher der Gehalt der gegenüber dem Silylierungsmittel reaktiven Gruppen in der Polyurethane/Polyharnstoffe enthaltenden Reaktionsmischung bestimmt wird. Geeignete Meßmethoden sind alle, die in ausreichend kurzer Zeit den Umsatz der Reaktion detektieren können. Dies sind z.B. spektroskopische Verfahren, wie Nah-Infrarot Spektroskopie, FT-IR-Spektroskopie, Raman und FT-Ramanspektroskopie.

In einer bevorzugten Ausführungsform der Erfindung beträgt das molare Verhältnis der Isocyanatgruppen der eingesetzten Komponente β) zu der Summe der Aminogruppen und Hydroxylgruppen der eingesetzten Komponente α) 0,1 bis 10, bevorzugt 0,5 bis 1,8.

Eine Ausführungsform der vorliegenden Erfindung sieht vor, dass die Umsetzung der Komponente α) mit Komponente β) bei einem Überschuss an NCO-Gruppen durchgeführt wird. Bevorzugt werden in dieser Ausführungsform als Silylierungsmittel Aminogruppen enthaltende Alkoxysilane eingesetzt.

Eine weitere Ausführungsform der vorliegenden Erfindung sieht vor, dass die Umsetzung der Komponente α) mit Komponente β) bei einem Überschuss an OH-Gruppen durchgeführt wird. Bevorzugt werden in dieser Ausführungsform als Silylierungsmittel Isocyanatgruppen enthaltende Alkoxysilane eingesetzt.

In einer bevorzugten Ausführungsform der Erfindung beträgt das molare Verhältnis des Silylierungsmittels zu der gegenüber dem Silylierungsmittel reaktiven Endgruppen in der Polyurethane/Polyharnstoffe enthaltenden Reaktionsmischung 0,1 bis 3, bevorzugt 0,8 bis 1,2.

Das erfindungsgemäße Verfahren wird bevorzugt bei Normaldruck und in einer Atmosphäre von trockenem Schutzgas durchgeführt, wobei jedoch das Verfahren alternativ zwecks Entgasung von Rest-Isocyanat unter Vakuum oder zur Temperaturerhöhung unter Druck betrieben werden kann.

Als weitere Bestandteile der Komponenten β), α) und des Silylierungsmittels kommen in dem erfindungsgemäßen Verfahren vielfach auch Weichmacher, Gleitmittel, Molekularkettenregler, Flammschutzmittel, anorganische/organische Füllstoffe, Farbstoffe, Pigmente und Stabilisatoren (bezüglich Hydrolyse, Licht und thermisch bedingten Abbau), Kettenverlängerer, Lösungsmittel und Katalysatoren zum Einsatz.

In einer bevorzugten Ausführungsform wird in dem erfindungsgemäßen Verfahren kein für die Herstellung von Polyurethanen geeigneter Katalysator eingesetzt. Diese Verfahrensvariante wird insbesondere bei Reaktionstemperaturen über 70°C, insbesondere über 150°C und unter Verwendung reaktiver Ausgangskomponenten verwendet. Die Abwesenheit des Katalysators im polymeren Verfahrensprodukt ist als ein wesentlicher qualitativer Vorteil anzusehen.

Eine Ausführungsform sieht vor, dass ein für die Herstellung von Polyurethanen geeigneter Katalysator eingesetzt wird, welcher bevorzugt als Bestandteil der Ausgangsreaktionskomponenten vorliegt. Als Katalysatoren geeignet sind die an sich bekannten, üblichen Katalysatoren der Polyurethanchemie, wie Säuren, z. B. para-Toluolsulfonsäure oder tert. Amine, wie z. B. Triethylamin, Triethylendiamin (DABCO) oder solche, welche Atome, wie z.B. Sn, Mn, Fe, Co, Cd, Ni, Cu, Zn, Zr, Ti, Hf, Al, Th, Ce, Bi, Hg, N, P, aufweisen. Das molare Verhältnis Katalysator/Isocyanat ist abhängig vom Typ des Isocyanates und der Art des Katalysators und liegt normalerweise zwischen von 0 bis 0,1, bevorzugt 0 bis 0,03.

Als Bestandteile der Komponenten β), α) und des Silylierungsmittels können auch Lösungsmittel eingesetzt werden. Diese Lösungsmittel können während der Reaktion siedend entweichen oder in der Mischung verbleiben. Als Lösungsmittel eignen sich z.B. Ethylacetat, Butylacetat, 1-Methoxypropyl-2-acetat, 3-Methoxy-n-butylacetat, 2-Butanon, 4-Methyl-2-pentanon, Cyclohexanon, Toluol, Xylol, Chlorbenzol oder Testbenzin. Lösungsmittelmischungen, die vor allem höher substituierte Aromaten enthalten, z.B. im Handel erhältlich als Solvent Naphtha, Solvesso^{®} (Exxon Chemicals, Houston, USA), Cypar^{®} (Shell Chemicals, Eschborn, DE), Cyclo Sol^{®} (Shell Chemicals, Eschborn, DE), Tolu Sol^{®} (Shell Chemicals, Eschborn, DE), Shellsol^{®} (Shell Chemicals, Eschborn, DE) sind ebenfalls geeignet. Verwendbare Lösemittel sind außerdem Kohlensäureester, wie Dimethylcarbonat, Diethylcarbonat, 1,2-Ethylencarbonat und 1,2-Propylencarbonat; Lactone, wie 1,3-Propiolacton, i-Butyrolacton, Caprolacton, Methylcaprolacton, Propylenglykoldiacetat, Diethylenglykoldimethylether, Dipropylenglykoldimethylether, Diethylenglykolethylacetat, N-Methylpyrrolidon und N-Methylcaprolactam.

Bei dem in Komponente β) eingesetzten Isocyanat handelt es sich bevorzugt um eine aliphatische, cycloaliphatische, araliphatische und/oder aromatische Verbindung, bevorzugt um ein Diisocyanat oder Triisocyanat, wobei es sich auch um Mischungen dieser Verbindungen handeln kann. Hierbei ist es als bevorzugt anzusehen, dass es sich um Hexamethylendiisocyanat-1,6 (HDI), 1-Isocyanato-3,3,5-trimethyl-5-isocyanatomethylcyclohexan (IPDI), 2,4- und/oder 2,6-Toluylendiisocyanat (TDI) und/oder 4,4'-, 2,4'- und/oder 2,2'-Diphenylmethandiisocyanat (MDI), m-Xylendiisocyanat (MXDI), m- oder p-Tetramethylxylendiisocyanat (m-TMXDI, p-TMXDI), 4,4'-Dicyclohexylmethandiisocyanat (H12MDI), Naphthalin-1,5-Diisocyanat, Cyclohexan-1,4-diisocyanat, hydriertes Xylylen-diisocyanat (H6XDI), 1-Methyl-2,4-diisocyanato-cyclohexan, Tetramethoxybutan-1,4-diisocyanat, Butan-1,4-diisocyanat, 1,6-Diisocyanato-2,2,4-trimethylhexan, 1,6-Diisocyanato-2,4,4-trimethylhexan, 1-Isocyanato-1-methyl-4(3)-isocyanatomethylcyclohexan (IMCI) sowie 1,12-Dodecandiisocyanat (C12D1) handelt.

Bei dem in Komponente α) eingesetzten Polyol und/oder Polyamin handelt es sich bevorzugt um Polyetherpolyole, Polyesterpolyole, Polybutadienepolyole und Polycarbonatpolyole, wobei es sich auch um Mischungen dieser Verbindungen handeln kann. Die Polyole und/oder Polyamine enthalten bevorzugt zwischen zwei und 10, besonders bevorzugt zwischen zwei und drei Hydroxylgruppen und/oder Aminogruppen und besitzen ein gewichtsmittleres Molekulargewicht zwischen 32 und 20000, besonders bevorzugt zwischen 90 und 18000 g/mol. Als Polyole eignen sich vorzugsweise die bei Raumtemperatur flüssigen, glasartig fest/amorphen oder kristallinen Polyhydroxyverbindungen. Als typische Beispiele wären difunktionelle Polypropylenglykole zu nennen. Es können auch Hydroxylgruppen aufweisende statistische Copolymere und/oder Blockcopolymere des Ethylenoxids und Propylenoxids eingesetzt werden. Geeignete Polyetherpolyole sind die in der Polyurethanchemie an sich bekannten Polyether, wie die unter Verwendung von Startermolekülen hergestellten Polyole aus Styroloxid, Propylenoxid, Butylenoxid, Tetrahydrofuran oder Epichlorhydrin. Konkret eignen sich insbesondere auch Poly(oxytetramethylen)glykol (Poly-THF), 1,2-Polybutylenglykol, oder deren Mischungen. Insbesondere geeignet sind Polypropylenoxid und Polyethylenoxid und deren Mischungen. Ein weiterer als Polyolkomponente einsetzbarer Copolymertyp, der endständig Hydroxylgruppen aufweist, ist gemäß der allgemeinen Formel (herstellbar z.B. mittels "Controlled" High-Speed Anionic Polymerization gemäß Macromolecules 2004, 37, 4038-4043): 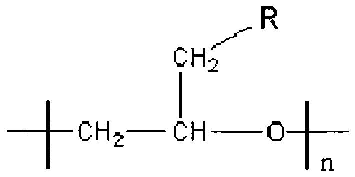 in welcher R gleich oder verschieden ist und bevorzugt durch OMe, OiPr, Cl oder Br repräsentiert wird.

Weiterhin eignen sich als Polyolkomponente insbesondere die bei 25°C flüssigen, glasartig amorphen oder kristallinen Polyesterdi- bzw. polyole, die durch Kondensation von Di- oder Tricarbonsäuren, wie Adipinsäure, Sebacinsäure, Glutarsäure, Azelainsäure, Korksäure, Undecandisäure, Dodecandisäure, 3,3-Dimethylglutarsäure, Terephthalsäure, Isophthalsäure, Hexahydrophthalsäure und/oder Dimerfettsäure, mit niedermolekularen Diolen, Triolen oder Polyolen, wie Ethylenglykol, Propylenglykol, Diethylenglykol, Triethylenglykol, Dipropylenglykol, 1,4-Butandiol, 1,6-Hexandiol, 1,8-Octandiol, 1,10-Decandiol, 1,12-Dodecandiol, Dimerfettalkohol, Glycerin, Pentaerythritol und/ oder Trimethylolpropan, herstellbar sind.

Eine weitere geeignete Gruppe der Polyole sind die Polyester z.B. auf der Basis von Caprolacton, welche auch als "Polycaprolactone" bezeichnet werden. Weitere einsetzbare Polyole sind Polycarbonat-Polyole und Dimerdiole sowie Polyole auf Basis pflanzlicher Öle und ihrer Derivate, wie Rizinusöl und dessen Derivate oder epoxidiertes Sojabohnenöl. Außerdem kommen Hydroxylgruppen aufweisende Polycarbonate in Frage, welche durch Reaktion von Kohlensäurederivaten, z. B. Diphenylcarbonat, Dimethylcarbonat oder Phosgen, mit Diolen erhältlich sind. Besonders eignen sich z.B. Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A, Tetrabrombisphenol A, Glyzerin, Trimethylolpropan, 1,2,6-Hexantriol, 1,2,4-Butantriol, Trimethylolpropan, Pentaerythrit, Chinit, Mannit, Sorbit, Methylglykosid und 1,3,4,6-Dianhydrohexite. Auch die Hydroxy-funktionellen Polybutadiene, welche u.a. unter dem Handelsnamen "Poly-bd®" käuflich sind, können als Polyole ebenso wie deren hydrierten Analoga eingesetzt werden. Weiterhin kommen Hydroxy-funktionelle Polysulfide, welche unter dem Handelsnamen "Thiokol® NPS-282" vertrieben werden, sowie Hydroxy-funktionelle Polysiloxane in Frage.

Als erfindungsgemäß einsetzbare Polyamine eignen sich insbesondere Hydrazin, Hydrazinhydrat und substituierte Hydrazine, wie N-Methylhydrazin, N,N'-Dimethylhydrazin, Säurehydrazide der Adipinsäure, Methyladipinsäure, Sebacinsäure, Hydracrylsäure, Terephthalsäure, Semicarbazidoalkylen-hydrazide, wie 13-Semicarbazidopropionsäurehydrazid, Semicarbazidoalkylencarbazinester, wie z. B. 2-Semicarbazidoethyl-carbazinester und/ oder Aminosemicarbazid-Verbindungen, wie 13-Aminoethylsemicarbazidocarbonat.

Polyamine, z.B. solche, die unter dem Handelsnamen Jeffamine® (es handelt sich um Polyetherpolyamine) vertrieben werden, sind auch geeignet.
Als Polyole und/oder Polyamine kommen auch die als sogenannte Kettenverlänger bekannten Spezies in Frage, welche bei der Herstellung von Polyurethanen und Polyharnstoffen mit überschüssigen Isocyanatgruppen reagieren, normalerweise ein Molekulargewicht (Mₙ) von unter 400 aufweisen und häufig in Form von Polyolen, Aminopolyolen oder aliphatischen, cycloaliphatischen oder araliphatischen Polyaminen vorliegen.

Geeignete Kettenverlängerer sind beispielsweise:
- Alkandiole, wie Ethandiol, 1,2- und 1,3-Propandiol, 1,4- und 2,3-Butandiol, 1,5-Pentandiol, 1,3-Dimethylpropandiol, 1,6-Hexandiol, Neopentylglykol, Cyclohexandimethanol, 2-Methyl-1,3-propandiol,
- Etherdiole, wie Diethylendiglykol, Triethylenglykol oder Hydrochinondihydroxyethylether
- Hydroxybutylhydroxycapronsäureester, Hydroxyhexylhydroxybuttersäureester, Adipinsäurehydroxyethylester und Terephthalsäurebishydroxyethylester und
- Polyamine, wie Ethylendiamin, 1,2- und 1,3-Diaminopropan, 1,4-Diaminobutan, 1,6-Diaminohexan, Isomerengemisch von 2,2,4- und 2,4,4-Trimethyl-hexamethylendiamin, 2-Methyl-pentamethylendiamin, Diethylentriamin, 1,3- sowie 1,4-Xylylendiamin und 4,4- Diaminodicyclohexylmethan

Schließlich soll erwähnt sein, dass die Polyole und/oder Polyamine Doppelbindungen enthalten können, welche z.B. aus langkettigen, aliphatischen Carbonsäuren oder Fettalkoholen resultieren können. Eine Funktionalisierung mit olefinischen Doppelbindungen ist z. B. auch durch den Einbau vinylischer oder allylischer Gruppen möglich. Diese können beispielsweise von ungesättigten Säuren wie Maleinsäureanhydrid, Acrylsäure oder Methacrylsäure sowie deren jeweiligen Estern stammen.

Als besonders bevorzugt im Sinne der Erfindung ist es, dass es sich bei dem in Komponente α) eingesetzen Polyol und/oder Polyamin um Polypropylendiol, Polypropylentriol, Polypropylenpolyol, Polyethylendiol, Polyethylentriol, Polyethylenpolyol, Polypropylendiamin, Polypropylentriamin, Polypropylenpolyamin, Poly-THF-diamin, Polybutadiendiol, Polyesterdiol, Polyestertriol, Polyesterpolyol, Polyesteretherdiol, Polyesterethertriol, Polyesteretherpolyol, besonders bevorzugt Polypropylendiol, Polypropylentriol, Poly-THF-diol, Polyhexandiolcarbamatdiol, Polycaprolactamdiol und Polycaprolactamtriol handelt. Weiterhin kann es sich auch um Mischungen der genannten Verbindungen handeln.

Bezüglich der gemäß vorliegender Erfindung bevorzugt zu verwendenden Silylierungsmittel wird auf die Patentanmeldungen WO2006/088839 A2 und WO 2008/061651 A1 sowie die Patentschrift EP 1 685171 B1 Bezug genommen.

Silylierungsmittel, welche sich weiterhin bevorzugt für die vorliegende Erfindung eigenen, sind insbesondere Silane der allgemeinen Formel:

Y-R¹-Si(Me)ₙ(OR²)₃₋ₙ

wobei Y repräsentiert wird durch -NCO, -NHR, -NH₂ oder -SH,
R repräsentiert wird durch eine Alkylgruppe mit ein bis 10 Kohlenstoffatomen,
R¹ repräsentiert wird durch eine divalente Kohlenwasserstoffeinheit mit ein bis 10 Kohlenstoffatomen,
Me repräsentiert wird durch Methyl,
OR² unabhängig voneinander repräsentiert wird durch eine Alkoxygruppe, wobei R² eine Alkylgruppe mit ein bis 5 Kohlenstoffatomen darstellt und/oder OR² eine Phenoxygruppe, eine Naphtyloxygruppe, eine Phenoxygruppe, welche an der ortho-, metha- und/oder para-Position substituiert ist, mit einer C₁-C₂₀ Alkyl-, Alkylaryl-, Alkoxy-, Phenyl-, substituierten Phenyl-, Thioalkyl-, Nitro-, Halogen-, Nitril-, Carboxyalkyl-, Carboxyamid-, -NH₂ und/oder NHR-Gruppe, worin R eine lineare oder verzweigte C₁-C₅ Alkylgruppe oder Phenyl darstellt.

n repräsentiert wird durch 0 bis 3.

Als Silylierungsmittel können aber auch Mischungen aus mindestens zwei der genannten Verbindungen verwendet werden.

In einer bevorzugten Ausführungsform werden insbesondere Aminogruppen oder Isocyanatgruppen enthaltende Alkoxysilane verwendet. Als Aminogruppen enthaltende Alkoxysilane sind insbesondere Verbindungen geeignet, welche ausgewählt sind aus der Gruppe 3-Aminopropyl-trimethoxysilan, 3- Aminopropyl-dimethoxymethylsilan, 3-Amino-2-methylpropyl-trimethoxysilan, Aminobutyltrimethoxysilan, 4-Aminobutyl-dimethoxymethylsilan, 4-Amino-3-methylbutyl-trimethoxysilan, 4-Amino-3,3-dimethylbutyl-trimethoxysilan, 4- Amino-3,3-dimethylbutyl-dimethoxymethylsilan, 2-Aminoethyl-trimethoxysilan, 2-Aminoethyl-dimethoxymethylsilan, Aminomethyl-trimethoxysilan, Aminomethyl-dimethoxymethylsilan, Aminomethylmethoxydimethylsilan, N-Methyl-3-aminopropyl-trimethoxysilan, N-Ethyl-3-aminopropyl-trimethoxysilan, N-Butyl-3-aminopropyl-trimethoxysilan, N-Cyclohexyl-3-aminopropyl-trimethoxysilan, N-Phenyl-3-aminopropyl-trimethoxysilan, N-Methyl-3-amino-2-methylpropyl-trimethoxysilan, N-Ethyl-3-amino-2-methylpropyl-trimethoxysilan, N-Ethyl-3-aminopropyl-dimethoxy-methylsilan, N-Phenyl-4-aminobutyl-trimethoxysilan, N-Phenyl-aminomethyl-dimethoxymethylsilan, N-Cyclohexyl-aminomethyl-dimethoxymethylsilan, N-Methyl-aminomethyl-dimethoxymethylsilan, N-Ethylaminomethyl-dimethoxymethylsilan, N-Propyl-aminomethyl-dimethoxymethylsilan, N-Butyl-aminomethyl-dimethoxymethylsilan, N-(2-Aminoethyl)-3-amino-propyl-trimethoxysilan, 3-[2-(2-Aminoethylamino)-ethylamino]-propyl-trimethoxysilan, Bis(trimethoxysilylpropyl)amin, sowie deren Analoga mit Ethoxy- oder Isopropoxygruppen anstelle der Methoxygruppen am Silicium.

Als Isocyanatgruppen enthaltende Alkoxysilane sind insbesondere Verbindungen geeignet, welche ausgewählt sind aus der Gruppe bestehend aus Isocyanatopropyltriethoxysilan, Isocyanatopropyltrimethoxysilan, Isocyanatopropylmethyldiethoxysilan, Isocyanatopropylmethyldimethoxysilan, Isocyanatomethyltrimethoxysilan, Isocyanatomethyltriethoxysilan, Isocyanatomethylmethyldiethoxysilan, Isocyanatomethylmethyldimethoxysilan, Isocyanatomethyldimethylmethoxysilan oder Isocyanatomethyldimethylethoxysilan.

Die erhaltenen Produkte, enthaltend silylierte Polyurethane/ Polyharnstoffe, können beispielsweise in Kleb- und Dichtstoffen eingesetzt werden. In einer weiteren Ausführungsform der vorliegenden Erfindung kann dem erfindungsgemäßen Verfahren ein kontinuierlicher Prozess zur Herstellung von Kleb- und Dichtstoffen sowie eine kontinuierliche Konfektionierung angeschlossen werden.

Die vorliegende Erfindung soll im Folgenden näher anhand eines Ausführungsbeispiels beschrieben werden.

### Beispiel

### Kontinuierliche Synthese von silyliertem Polyurethan-Prepolymer mit Spinning-Disc-Reaktor und statischem Mischer

Das nachfolgende erfindungsgemäße Beispiel wurde unter Verwendung eines Spinning-Disc-Reaktors (rotierenden Körper A) durchgeführt, welcher als glatte Scheibe mit einem Durchmesser von 20 cm ausgeführt ist und aus Kupfer besteht, wobei die Oberfläche verchromt ist. Die Scheibe befindet sich auf einer vertikalen Achse und ist von einem metallischen Gehäuse umgeben, das auf 0°C gekühlt wird. Die Scheibe wird von innen mit einem Wärmeträgeröl aufgeheizt. Vergleichbare Reaktoren werden auch in den Dokumenten WO00/48728, WO00/48729, WO00/48730, WO00/48731 und WO00/48732 näher beschrieben.

Polypropylenglycol 4000 (PPG 4000) (z. B. Acclaim® Polyol 4200N, der Bayer AG), Polypropylenglycol 8000 (PPG 8000) (z. B. Acclaim® Polyol 8200N, der Bayer AG), 0.1 % Bismut neodecanoat (Fa Aldrich) und 1-Isocyanato-3,3,5-trimethyl-5-isocyanatomethylcyclohexan (IPDI, z. B. Vestanat® IPDI, der Evonik Industries GmbH), werden direkt vor der Dosierung auf die Scheibe mithilfe von Zahnradpumpen und für den Katalysator mit einer HPLC-Pumpe unter Stickstoffdeckung in einen statischen Mischer gepumpt und dort kontinuierlich gemischt. Anschließend wird das Gemisch mit einer Dosierrate von 5 ml/s mit einer Zahnradpumpe unter Stickstoffdeckung mittig auf die rotierende Scheibe gegeben. Diese rotiert mit 900 UpM (UpM = Umdrehungen pro Minute) und hat eine Temperatur von 200°C. Das entstandene Polyurethan verlässt die Scheibe (mittlere Verweilzeit auf der Scheibe: 3-4 s) und wird an der Reaktorwand abgekühlt. Es verlässt den Spinning-Disc-Reaktor mit einer Temperatur von 70°C. Der NCO-Gehalt kann durch Probenentnahme und Titration oder durch eine Online-NCO-Messung bestimmt werden. Das erhaltene Polyurethan wird kontinuierlich mit einer weiteren Zahnradpumpe in einen statischen Mischer geleitet, wobei gleichzeitig ein Stabilisator und die benötigte Menge eines aminogruppenhaltigen Trialkoxysilans kontinuierlich dosiert wird, um alle vorhandenen NCO-Gruppen mit dem Amin zum Harnstoff umzusetzen (Endcappen). Nach dem Verlassen der kontinuierlichen Mischvorrichtung wird der NCO-Gehalt durch IR-Spektroskopie oder Online mit NIR-Messung kontrolliert (0% Rest NCO-Gehalt).

Benötigte Zeit zur Herstellung von 10 kg: ca. 0,6 h

| | |
|---|---|
| | |
| NCO-Gehalt des Polyurethans vor dem Endcappen | 0.98 Gew.% |
| Viskosität des silylierten Prepolymers¹ | 57000 mPa s |
| MW² | 106700 g/mol |
| PDI² | 3.0 |
| Maximum MP² | 57700 g/mol |

| | |
|---|---|
| ¹gemäß DIN EN ISO 2555 EN ² Mittleres Molekulargewicht (MW), Polydispersität (PDI) und Maximum der Molekulargewichtsverteilung (MP) ermittelt durch GPC (Polystyrol-Standards, Lösungsmittel THF) | |

### Physikalische Eigenschaften des hieraus hergestellten silylierten Polurethan-Dichtstoffes

| | silylierter Polurethan-Dichtstoff |
|---|---|
| Zugfestigkeit³ / N/mm² | 2.66 |
| Dehnung³/ % | 129 |
| Kraft bei 100% Dehnung³ /N/mm² | 2.21 |
| Hautbildezeit /min | 22 |
| Handmuster | elastisch |

| | |
|---|---|
| ³gemäß DIN 53504 | |

## Patentansprüche

1. Verfahren zur Herstellung von silylierten Polyurethanen und/oder Polyharnstoffen, umfassend die Schritte:
a) Auftragung einer Komponente β) enthaltend Isocyanat sowie einer Komponente α) enthaltend Polyol und/oder Polyamin auf mindestens eine um eine Rotationsachse rotierende Oberfläche eines Körpers A, welche eine Temperatur zwischen 60 und 400°C aufweist,
b) Umsetzung des Reaktionsproduktes von β) Isocyanat sowie α) Polyol und/oder Polyamin mit einem Silylierungsmittel.

2. Verfahren nach Anspruch 1, **dadurch gekennzeichnet, dass** das Silylierungsmittel auf eine Oberfläche des Körpers A aufgetragen wird, wobei die Auftragung in einem Bereich der Oberfläche durchgeführt wird an dem der Umsetzungsgrad von β) Isocyanat mit α) Polyol und/oder Polyamin mindestens 75 mol% beträgt, ggf. bezüglich der im Unterschuss eingesetzten Komponente.

3. Verfahren nach Anspruch 1, **dadurch gekennzeichnet, dass** das Reaktionsprodukt von β) Isocyanat sowie α) Polyol und/oder Polyamin nach dem Verlassen des Körpers A mit einem Silylierungsmittel in einer Mischvorrichtung umgesetzt wird.

4. Verfahren nach einem der Ansprüche 1 bis 3, **dadurch gekennzeichnet, dass** die Reaktionsmischung nach dem Verlassen der Oberfläche des Körpers A abgekühlt wird.

5. Verfahren nach einem der Ansprüche 1 bis 4, **dadurch gekennzeichnet, dass** das Verfahren kontinuierlich betrieben wird.

6. Verfahren nach einem der Ansprüche 1 bis 5, **dadurch gekennzeichnet, dass** die Umsetzung der Komponente α) mit Komponente β) bei einem Überschuss an NCO-Gruppen durchgeführt wird.

7. Verfahren nach Anspruch 6, **dadurch gekennzeichnet, dass** als Silylierungsmittel Aminogruppen enthaltende Alkoxysilane eingesetzt werden.

8. Verfahren nach einem der Ansprüche 1 bis 5, **dadurch gekennzeichnet, dass** die Umsetzung der Komponente α) mit Komponente β) bei einem Überschuss an OH-Gruppen durchgeführt wird.

9. Verfahren nach Anspruch 8, **dadurch gekennzeichnet, dass** als Silylierungsmittel Isocyanatgruppen enthaltende Alkoxysilane eingesetzt werden.

10. Verfahren nach einem der Ansprüche 1 bis 9, **dadurch gekennzeichnet, dass** die Oberfläche des Körpers A sich auf weitere rotierende Körper erstreckt, so dass die Reaktionsmischung vor dem Abkühlen von der hei-βen Oberfläche des rotierenden Körpers A auf die heiße Oberfläche mindestens eines weiteren rotierenden, eine heiße Oberfläche aufinreisenden Körpers gelangt.

11. Verfahren nach einem der Ansprüche 1 bis 10, **dadurch gekennzeichnet, dass** der rotierende Körper A als eine Drehscheibe vorliegt, bei der die Ausgangskomponenten α) und β) einzeln und/oder als Mischung mit Hilfe eines Dosierungssystems im flächenmittleren Bereich aufgetragen werden und zum Abkühlen der Reaktionsmischung eine Quenscheinrichtung als eine die Drehscheibe umgebende Kühlwand vorhanden ist, auf die die Reaktionskomposition nach Verlassen der heißen Oberfläche auftrifft.

12. Verfahren nach einem der Ansprüche 1 bis 11, **dadurch gekennzeichnet, dass** die Menge an Silylierungsmittel, welche eingebracht wird, über eine Messung gesteuert wird, mit welcher der Gehalt der gegenüber dem Silylierungsmittel reaktiven Gruppen in der Polyurethane/Polyharnstoffe enthaltenden Reaktionsmischung bestimmt wird.

13. Verfahren nach einem der Ansprüche 1 bis 12, **dadurch gekennzeichnet, dass** es sich bei dem in Komponente β) eingesetzten Isocyanat um Hexamethylendiisocyanat-1,6 (HDI), 1-Isocyanato-3,3,5-trimethyl-5-isocyanatomethylcyclohexan (IPDI), 2,4- und/oder 2,6-Toluylendiisocyanat (TDI), 4,4'-, 2,4'- und/oder 2,2'-Diphenylmethandiisocyanat (MDI), m-Xylendiisocyanat (MXDI), m- oder p-Tetramethylxylendüsocyanat (m-TMXDI, p-TMXDI), 4,4'-Dicyclohexylmethandiisocyanat (H12MD1), Naphthalin-1,5-Diisocyanat, Cyclohexan-1,4-diisocyanat, hydriertes Xylylen-diisocyanat (H6XDI), 1-Methyl-2,4-diisocyanato-cyclohexan, Tetramethoxybutan-1,4-diisocyanat, Butan-1,4-diisocyanat, Hexan-1,6-diisocyanat (HDI), 1,6-Diisocyanato-2,2,4-trimethylhexan, 1,6-Diisocyanato-2,4,4-trimethylhexan, 1-Isocyanato-1-methyl-4(3)-isocyanatomethylcyclohexan (IMCI) und/oder 1,12-Dodecandiisocyanat (C12DI) handelt.

14. Verfahren nach einem der Ansprüche 1 bis 13, **dadurch gekennzeichnet, dass** es sich bei dem in Komponente α) eingesetzten Polyol und/oder Polyamin um Polypropylendiol, Polypropylentriol, Polypropylenpolyol, Polyethylendiol, Polyethylentriol, Polyethylenpolyol, Polypropylendiamin, Polypropylentriamin, Polypropylenpolyamin, Poly-THF-diamin, Polybutadiendiol, Polyesterdiol, Polyestertriol, Polyesterpolyol, Polyesteretherdiol, Polyesterethertriol, Polyesteretherpolyol, Polypropylendiol, Polypropylentriol, Poly-THF-diol, Polyhexandiolcarbamatdiol, Polycaprolactamdiol und Polycaprolactamtriol handelt.

## Claims

1. Process for the preparation of silylated polyurethanes and/or polyureas, comprising the steps:
a) application of a component β) containing isocyanate and of a component α) containing polyol and/or polyamine to at least one surface of body A, which surface rotates about an axis of rotation and has a temperature between 60 and 400°C,
b) reaction of the reaction product of β) isocyanate and α) polyol and/or polyamine with a silylating agent.

2. Process according to Claim 1, **characterized in that** the silylating agent is applied to a surface of the body A, the application being carried out in a surface region on which the degree of reaction of β) isocyanate with α) polyol and/or polyamine is at least 75 mol%, if appropriate based on the component used in less than the stoichiometric amount.

3. Process according to Claim 1, **characterized in that** the reaction product of β) isocyanate and α) polyol and/or polyamine is reacted with a silylating agent in a mixing apparatus after leaving the body A.

4. Process according to any of Claims 1 to 3, **characterized in that** the reaction mixture is cooled after leaving the surface of the body A.

5. Process according to any of Claims 1 to 4, **characterized in that** the process is operated continuously.

6. Process according to any of Claims 1 to 5, **characterized in that** the reaction of the component α) with component β) is carried out with an excess of NCO groups.

7. Process according to Claim 6, **characterized in that** alkoxysilanes containing amino groups are used as the silylating agent.

8. Process according to any of Claims 1 to 5, **characterized in that** the reaction of the component α) with component β) is carried out with an excess of OH groups.

9. Process according to Claim 8, **characterized in that** alkoxysilanes containing isocyanate groups are used as the silylating agent.

10. Process according to any of Claims 1 to 9, **characterized in that** the surface of the body A extends to further rotating bodies so that, prior to cooling, the reaction mixture passes from the hot surface of the rotating body A to the hot surface of at least one further rotating body having a hot surface.

11. Process according to any of Claims 1 to 10, **characterized in that** the rotating body A is present as a rotating disc to which the starting components α) and β) are applied individually and/or as a mixture with the aid of a metering system in the central region of the surface and, in order to cool the reaction mixture, a quench device in the form of a cooling wall surrounding the rotating disc is present, onto which quench device the reaction composition strikes after leaving the hot surface.

12. Process according to any one of Claims 1 to 11, **characterized in that** the amount of silylating agent which is introduced is controlled via a measurement by means of which the content of the groups reactive toward the silylating agent in the reaction mixture containing polyurethanes/polyureas is determined.

13. Process according to any of Claims 1 to 12, **characterized in that** the isocyanate used in component β) is hexamethylene 1,6-diisocyanate (HDI), 1-isocyanato-3,3,5-trimethyl-5-isocyanatomethylcyclohexane (IPDI), 2,4- and/or 2,6-toluene diisocyanate (TDI), 4,4'-, 2,4'-and/or 2,2'-diphenylmethane diisocyanate (MDI), m-xylene diisocyanate (MXDI), m- or p-tetramethylxylene diisocyanate (m-TMXDI, p-TMXDI), 4,4'-dicyclohexylmethane diisocyanate (H12MDI), naphthalene 1,5-diisocyanate, cyclohexane 1,4-diisocyanate, hydrogenated xylylene diisocyanate (H6XDI), 1-methyl-2,4-diisocyanatocyclohexane, tetramethoxybutane 1,4-diisocyanate, butane 1,4-diisocyanate, hexane 1,6-diisocyanate (HDI), 1,6-diisocyanato-2,2,4-trimethylhexane , 1,6-diisocyanato-2,4,4-trimethylhexane, 1-isocyanato-1-methyl-4(3)-isocyanatomethylcyclohexane (IMCI) and/or 1,12-dodecane diisocyanate (C12DI).

14. Process according to any of Claims 1 to 13, **characterized in that** the polyol and/or polyamine used in component α) is polypropylenediol, polypropylenetriol, polypropylenepolyol, polyethylenediol, polyethylenetriol, polyethylenepolyol, polypropylenediamine, polypropylenetriamine, polypropylenepolyamine, poly-THF-diamine, polybutadienediol, polyesterdiol, polyestertriol, polyesterpolyol, polyesteretherdiol, polyesterethertriol, polyesteretherpolyol, poly-THF-diol, polyhexanediolcarbamatediol, polycaprolactamdiol and polycaprolactamtriol.

## Revendications

1. Procédé pour la préparation de polyurées silylées et/ou polyuréthanes silylés, comprenant les étapes :
a) application d'un composant β) contenant un isocyanate ainsi que d'un composant α) contenant un polyol et/ou une polyamine, sur au moins une surface, tournant autour d'un axe de rotation d'un corps A, qui présente une température comprise entre 60 et 400 °C.
b) mise en réaction du produit de réaction de l'isocyanate de β) ainsi que du polyol et/ou de la polyamine d'α) avec un agent de silylation.

2. Procédé selon la revendication 1, **caractérisé en ce qu'**on applique l'agent de silylation sur une surface du corps A, l'application s'effectuant dans une zone de la surface sur laquelle le degré de réaction de l'isocyanate de β) avec le polyol et/ou la polyamine d'α) est d'au moins 75 % en moles, éventuellement correspondant au composant utilisé en quantité insuffisante.

3. Procédé selon la revendication 1, **caractérisé en ce que** le produit de réaction de l'isocyanate de β) ainsi que du polyol et/ou de la polyamine d'α) après avoir quitté le corps A est mis en réaction avec un agent de silylation dans un dispositif de mélange.

4. Procédé selon l'une quelconque des revendications 1 à 3, **caractérisé en ce qu'**après avoir quitté la surface du corps A le mélange réactionnel est refroidi.

5. Procédé selon l'une quelconque des revendications 1 à 4, **caractérisé en ce que** le procédé est effectué en continu.

6. Procédé selon l'une quelconque des revendications 1 à 5, **caractérisé en ce que** la réaction du composant α) avec le composant β) est effectuée avec un excès de groupes NCO.

7. Procédé selon la revendication 6, **caractérisé en ce qu'**on utilise comme agent de silylation des alcoxysilanes contenant des groupes amino.

8. Procédé selon l'une quelconque des revendications 1 à 5, **caractérisé en ce que** la réaction du composant α) avec le composant β) est effectuée avec un excès de groupes OH.

9. Procédé selon la revendication 8, **caractérisé en ce qu'**on utilise comme agent de silylation des alcoxysilanes contenant des groupes isocyanate.

10. Procédé selon l'une quelconque des revendications 1 à 9, **caractérisé en ce que** la surface du corps A s'étend sur d'autres corps en rotation, de sorte qu'avant le refroidissement de la surface chaude du corps A en rotation le mélange réactionnel arrive sur la surface chaude d'au moins un autre corps en rotation, présentant une surface chaude.

11. Procédé selon l'une quelconque des revendications 1 à 10, **caractérisé en ce que** le corps A en rotation se trouve sou forme d'un disque rotatif sur lequel les composants de départ α) et β) sont appliqués individuellement et/ou sous forme de mélange, à l'aide d'un système doseur, dans la zone centrale de la surface, et pour le refroidissement du mélange réactionnel est présent un dispositif de refroidissement sous forme d'une paroi de refroidissement entourant le disque rotatif, sur laquelle arrive la composition réactionnelle après avoir quitté la surface chaude.

12. Procèdé selon l'une quelconque des revendications 1 à 11, **caractérisé en ce que** la quantité d'agent de silylation qui est appliquée est réglée par une mesure avec laquelle est déterminée la concentration des groupes réactifs vis-à-vis de l'agent de silylation dans le mélange réactionnel contenant des polyuréthanes/polyurées.

13. Procédé selon l'une quelconque des revendications 1 à 12, **caractérisé en ce que** l'isocyanate inclus dans le composant β) consiste en hexaméthylène-diisocyanate-1,6 (HDI), 1-isocyanato-3,3,5-triméthyl-5-isocyanatométhylcyclohexane (IPDI) 2,4- et/ou 2,6-toluylène-diisocyanate (TDI), 4,4'-, 2,4'- et/ou 2,2'-diphénylméthane-diisocyanate (MDI), m-xylène-diisocyanate (MXDI), m- ou p-tétraméthylxylène-diisocyanate (m-TMXDI, p-TMXDI), 4,4'-dicyclohexylméthane-diisocyanate (H12MDI), naphtalène-1,5-diisocyanate, cyclohexane-1,4-diisocyanate, xylylène-diisocyanate hydrogéné (H6XDI), 1-méthyl-2,4-diisocyanato-cyclohexane, tétraméthoxybutane-1,4-diisocyanate, butane-1,4-diisocyanate, hexane-1,6-diisocyanate (HDI), 1,6-diisocyanato-2,2,4-triméthylhexane, 1 , 6-diisocyanato-2,4,4-triméthylhexane, 1-isocyanato-1-méthyl-4(3)-isocyanatométhylcyclohexane (IMCI) et/ou 1,12-dodécanediisocyanate (C12DI).

14. Procédé selon l'une quelconque des revendications 1 à 13, **caractérisé en ce que** le polyol et/ou la polyamine inclus(e) dans le composant a) consiste(nt) en polypropylènediol, polypropylènetriol, polypropylènepolyol, polyéthylènediol, polyéthylènetriol, polyéthylènepolyol, polypropylènediamine, polypropylènetriamine, polypropylènepolyamine, poly-THF-diamine, polybutadiènediol, polyesterdiol, polyestertriol, polyesterpolyol, polyesterétherdiol, polyesteréthertriol, polyesterétherpolyol, poly-THF-diol, polyhexanediolcarbamatediol, polycaprolactamediol et polycaprolactametriol.
